(19) **Europäisches Patentamt**

**European Patent Office**

**Office européen des brevets**

(11) **EP 0 808 797 B1**

(12) **EUROPEAN PATENT SPECIFICATION**

(45) Date of publication and mention
of the grant of the patent:
**30.07.2003 Bulletin 2003/31**

(51) Int Cl.7: **C01B 21/26**

(21) Application number: **97108320.9**

(22) Date of filing: **22.05.1997**

(54) **Direct oxygen injection in nitric acid production**

Direkteinspritzung von Sauerstoff in der Herstellung von Salpetersäure

Injection directe d'oxygène dans la production d'acide nitrique

(84) Designated Contracting States:
**BE DE ES FR IT**

(30) Priority: **23.05.1996 US 652046**

(43) Date of publication of application:
**26.11.1997 Bulletin 1997/48**

(73) Proprietor: **PRAXAIR TECHNOLOGY, INC.**
**Danbury, CT 06810-5113 (US)**

(72) Inventor: **Wagner, Matthew Lincoln**
**White Plains, New York 10606 (US)**

(74) Representative: **Schwan, Gerhard, Dipl.-Ing.**
**Schwan Schwan Schorer**
**Patentanwälte**
**Bauerstrasse 22**
**80796 München (DE)**

(56) References cited:
**EP-A- 0 799 794**        **GB-A- 803 211**
**US-A- 4 183 906**        **US-A- 4 235 858**

**Description**

FIELD OF THE INVENTION

This invention is generally directed towards nitric acid production processes. More specifically, the invention addresses improving these processes through the use of direct oxygen injection.

BACKGROUND OF THE INVENTION

The production of nitric acid can be broken down into three major process steps:

I: Ammonia Oxidation

$$4\ NH_3(g) + 5\ O_2(g) \rightarrow 4\ NO(g) + 6\ H_2O(g) \tag{1}$$

II: Nitric Oxide Oxidation and Nitrogen Dioxide Dimerization

$$2\ NO(g) + O_2(g) \rightarrow 2\ NO_2(g) \tag{2}$$

$$2\ NO_2(g) \rightarrow N_2O_4(g) \tag{3}$$

and
III: Dinitrogen Tetroxide Absorption

$$3\ N_2O_4(g) + 2\ H_2O(l) \rightarrow 4\ HNO_3(aq) + 2\ NO(g) \tag{4}$$

The overall process stoichiometry is given by:

$$NH_3 + 2\ O_2 \rightarrow HNO_3 + H_2O \tag{5}$$

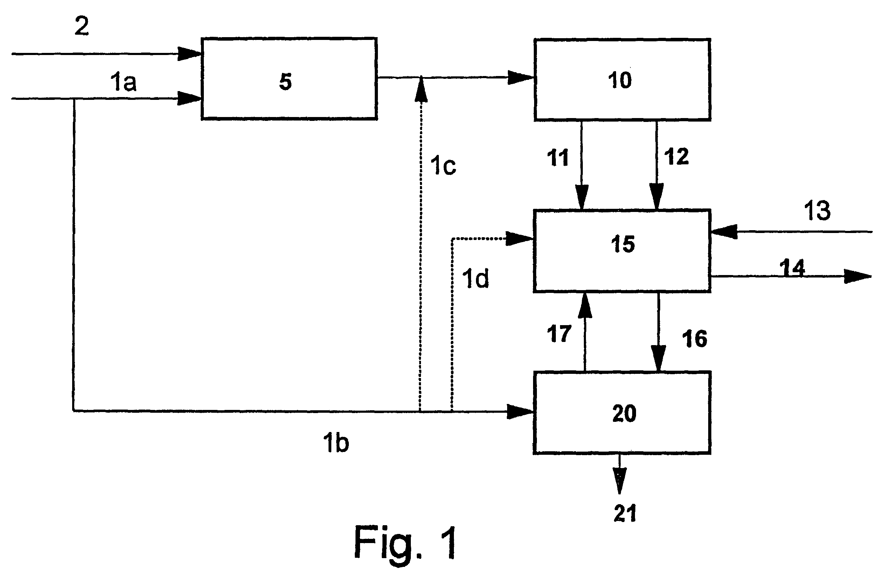

The above reactions are performed in four major process units: an ammonia converter, a cooler and condenser apparatus ("cooler/condenser apparatus"), an absorption tower, and a bleacher. These four process units along with tail gas treatment comprise the major unit operations of a modern nitric acid plant. Other equipment including, for example, piping or other means through which raw materials (including air) are provided and piping or other means which connects the above units is also present, and will be discussed in more detail below. A simplified process flow diagram displaying how these process units are linked together is shown in Figure 1.

Ammonia oxidation occurs exclusively in the ammonia converter **5**. Typically, the reaction is catalytic and occurs over a platinum containing wire gauze. A very small number of plants worldwide instead use a cobalt based pelletized catalyst.

Air **1a** and ammonia **2** are preheated and premixed before being routed to the converter **5.** The ammonia percentage in the converter feed is generally held between 9 to 11%. The desired reaction is reaction (1). The main competing reactions are:

$$2\ NO(g) \rightarrow N_2(g) + O_2(g) \tag{6}$$

and

$$4\ NH_3(g) + 6\ NO(g) \rightarrow 5\ N_2(g) + 6\ H_2O(g) \tag{7}$$

Ammonia oxidation is performed commercially at pressures ranging from 1 to 10 atm and temperatures ranging from 1500 to 1700 °F (815.5°C to 926.6°C). The choice of operating pressures is based primarily on downstream considerations. The choice of operating temperature is a balance between nitric oxide yield which increases with increasing temperature and catalyst loss which also increases with increasing temperature. Most converters are operated near 1650 °F (898.8°C).

The molar yield of nitric oxide from ammonia is generally near 95%, but it varies depending on the exact reaction conditions. The conversion of ammonia is very close to 100%. The yield is lower than 100% due to reactions (6) and (7). Along with temperature, converter configuration, and flow velocity, the oxygen to ammonia ratio of the gas entering the converter significantly affects nitric oxide yield.

The nitric oxide formed in the converter **5** must be converted into dinitrogen tetroxide in order produce nitric acid in the absorption tower **15**. This is done by first allowing the nitric oxide to react with the excess oxygen between the ammonia converter **5** and the absorption tower **15** to form nitrogen dioxide. The nitrogen dioxide is then allowed to dimerize to dinitrogen tetroxide. These reactions primarily occur within the cooler/condenser apparatus. It should be noted that other process equipment along with the cooler/condenser apparatus is present between the ammonia converter **5** and the absorption tower **15**. This equipment may include, but is not limited to a waste heat boiler, an economizer, a platinum filter and any piping or other means which connects these to each other and/or the converter **5** and the absorption tower **15**. The combination of this equipment between the converter and the absorption tower with the cooler/condenser apparatus is referred to as the "cooler/condenser train" **10.**

The cooler/condenser apparatus is essentially a heat exchanger coupled with a phase separator. Removing heat thermodynamically promotes both reactions and kinetically promotes the oxidation of nitric oxide (see equation 9 below). The effect of temperature on reaction rate is particularly important for this reaction because it is a surprisingly slow homogeneous gas phase reaction. The phase separator is needed to condense and remove the water formed in the ammonia converter. The condensed water generally contains up to 50 weight % nitric acid due to the absorption of some of the dinitrogen tetroxide that is present. This weak acid solution **12** is pumped to the middle of the absorption tower **15**. Additionally, some plants route additional air through line **1c,** shown in phantom, to the cooler/condensor train **10** in order to increase the oxygen partial pressure in the cooler and condenser apparatus.

Typical operating conditions are far from equilibrium, so the reverse reaction can be ignored and the rate of nitrogen dioxide formation can be given as:

$$\frac{dP_{NO_2}}{dt} = k(P_{NO})^2(P_{O_2}) \tag{8}$$

where the rate constant, k, as a function of temperature (in degrees Kelvin) is given as:

$$k = 10^{\left(\frac{641}{T} - 0.725\right)} \tag{9}$$

From equation (8), it is evident that high oxygen partial pressures will increase the reaction rate.

The dinitrogen tetroxide rich process gas **11** from the cooler/condensor is then contacted with water **13** in an absorption tower **15**. Typically, this is a trayed tower, although occasionally packed towers are used. The water enters at the top, the weak acid produced in the cooler/condenser apparatus enters on a middle tray, and process gas **11** in combination with additional air (usually referred to as secondary air) enters the adsorbtion tower **15** near its bottom or at its base via line **17**. The secondary air is provided by line **1b** and is routed first through the bleacher **20.** (As will be discussed below, air may also be provided directly to the absorber **15** through the air line **1d.)** The product acid **16** is withdrawn from the bottom and a $NO_x$ containing vent gas ("tail gas") **14** exits from the top.

In the tower the dinitrogen tetroxide absorbs in the water and forms nitric acid. This reactive absorption is generally represented as reaction (4). However, the actual mechanism is thought to be:

$$N_2O_4(g) \rightarrow N_2O_4(l) \tag{10}$$

$$N_2O_4(l) + H_2O(l) \rightarrow HNO_3(l) + HNO_2(l) \tag{11}$$

The nitrous acid ($HNO_2$) produced in reaction 11 either decomposes or oxidizes to form nitric acid:

$$3\ HNO_2(l) \rightarrow HNO_3(l) + H_2O(l) + 2\ NO(g) \tag{12}$$

$$2\ HNO_2(l) + O_2(l) \rightarrow 2\ HNO_3(l) \tag{13}$$

The nitric oxide formed in reaction (12) must be reoxidized through reaction (2). If not reoxidized, the nitric oxide passes out of the tower in the vent gas. This reduces yield and leads to higher environmental $NO_x$ emissions. The regulatory limit on $NO_x$ emissions makes the reoxidation of nitric oxide a significant bottleneck in nitric acid production. The reoxidation is done in the spaces between the tower trays. Secondary air via line **17,** and in some cases also via line **1d** as shown in phantom, is added to the tower to increase the rate of reoxidation. By increasing the oxygen partial pressure, the secondary air also promotes reaction (13).

The nitric acid **16** removed from the base of the absorption tower typically contains dissolved unreacted dinitrogen tetroxide, nitrous acid, dinitrogen trioxide, and nitrogen dioxide. These impurities discolor the acid usually giving the acid a yellow or straw color. A pure nitric acid water mixture is clear (referred to as "water white" in the industry).

The impurities associated with acid color can negatively impact the downstream uses of the acid. Because of this, the impurities must be removed. Since the removal of the impurities reduces the yellow color of the acid, this process step is known as bleaching.

To remove the impurities, the nitric acid is contacted countercurrently with an ascending stream of air provided to the bleacher **20** via line **1b.** The air physically strips the dissolved gases from the acid and along with chemically oxidizing the impurities. The two oxidation reactions which remove impurities are reaction (13) and reaction (2). Reaction (13) removes color by directly removing nitrous acid. Reaction (2) also removes nitrous acid by removing nitric oxide which shifts reaction (12) to the right.

The nitric acid **21** removed from the bleacher **20** is product acid ready to either be sold or consumed on site. The air and NOx (collectively **17**) exiting the bleacher is routed to the absorption tower **15**. This serves two purposes. It increases the oxygen partial pressure in the tower and allows the $NO_x$ components stripped in the bleacher to absorb and form nitric acid in the tower.

The bleacher **20** is either a trayed or packed tower separate from the absorption tower or the bottom few trays of the absorption tower itself. Sometimes both bleacher trays within the absorption tower and a separate bleacher tower are used.

The tail gas **14** from a nitric acid plant contains significant amounts of $NO_x$ and must be treated before being vented to the atmosphere. In the United States, emissions from newly constructed plants must be limited to 1.5 kg $NO_x$ per metric ton of acid (100% basis) which corresponds to $\sim$230 ppm. Three abatement methods are generally used. These are absorption, adsorption, and catalytic reduction.

It has long been known that the addition of oxygen can boost production in nitric acid production along with controlling NOx and increasing acid strength. By injecting oxygen downstream of the converter, some secondary air can be rerouted to the converter because the nitric oxide can be oxidized and the acid bleached with significantly less secondary air. By rerouting some secondary air to the converter, the total air flow to the converter will be increased. Since it is standard practice to keep the ammonia-to-air ratio constant, the ammonia flow will also be increased. This increase in ammonia flow will increase the amount of nitric acid produced. Thus, the more secondary air which may be rerouted, the greater the production increase. If the additional production can be utilized, a nitric acid producer will significantly increase their earnings by using direct injection to increase production. Unfortunately, however, the amount of oxygen required combined with the cost of oxygen has, in the past, typically made oxygen injection nonviable.

Norsk Hydro described their experience with oxygen addition in two papers. They stated that the minimum oxygen requirement was 1.05 pounds oxygen per additional pound of nitric acid produced (100% weight basis), hereinafter referred to as an "oxygen requirement". They did not describe how this minimum was reached. They did, however, explain that they either put all the oxygen into the bleacher **20** or all the oxygen into the cooler/condenser train **15**.

US 4,183,906 teaches that by splitting oxygen between the bleacher and a location at about the midpoint of the absorption column (where the reaction of nitrogen tetroxide gas with water to form aqueous nitric acid and nitric oxide gas is 50% complete) oxygen requirements are reduced to 0.85 pounds oxygen per additional pound of nitric acid produced.

Several other patents mention the use of oxygen in typical nitric acid plants. However, these patents are not concerned with boosting production. Instead they are concerned with NOx control (US 5,017,348), improving absorber efficiency (GB 758,417 and GB 1,064,275), and improving the operation of the cooler/condenser train (GB 803,211).

A related problem in nitric acid production is increasing the strength of the acid produced. At present there are four known methods for increasing acid strength. These are 1) reduction of ammonia flow into the reactor; 2) blending produced acid with concentrated acid (acid having a strength of 98 wt.%); 3) adding oxygen into the center section of the absorption tower while decreasing water flow into the reactor, as disclosed in U.S. Patent 4,183,906; and 4) plant redesign. Each of these options, and their deficiencies, are described below.

From both the equilibrium and absorption kinetics, it is evident that the higher the oxidation state of the $NO_x$ process gas entering the absorption tower, the higher the acid strength. Thus, for a given nitric acid facility, in order to increase acid strength, the oxidation state of the $NO_x$ process gas entering the absorption tower must be increased. If the same equipment is used, to increase the oxidation state of the $NO_x$ process gas entering.the absorption tower, the ratio between the total amount of air entering the process including both primary and secondary air and the ammonia entering the process must be increased. Since the total air flow cannot be increased because the air flow is limited by the size of the compressor, one must reduce the ammonia flow into the process to increase this ratio. The drawback is'that by reducing the ammonia flow, the production is correspondingly reduced. For example, a plant which nominally produces 267 TPD of 61% acid is only able to produce 254 TPD of 67% acid.

A second alternative is to blend concentrated acid (greater than 98% acid) with the acid produced from the nitric acid plant to produce a higher strength acid. Increasing strength by blending with concentrated acid requires the consumption of concentrated acid. This effectively increases the cost of producing the lower strength acid for the following reasons. About 5% of total nitric acid production is in the form of concentrated acid. Concentrated acid can be produced by the addition of another process step to a standard nitric plant design (dehydration or superazeotropic fractionation) or the replacement of the absorption step with autoclaving. Replacing the nitrogen oxides absorption step with an autoclaving step, allows concentrated nitric acid to be produced directly from nitrogen oxide, water and pure oxygen.

Unfortunately, the direct process is only capable of producing concentrated acid. It is not capable of increasing the strength of the acid produced by normal production means. Since the market for concentrated acid is very limited and very different than the market for normal strength acid, a producer who just wants to increase the strength of their acid without getting into the concentrated acid market will have no interest in adopting concentrated acid production technologies.

The maximum acid strength that can be produced is limited by the plant design. Typically, the maximum possible strength will be up to about 68% acid. While a nitric acid producer also has the option of revamping the plant to make higher strength acid, this involves significant capital outlays such as expanding the absorption tower and adding compression capacity.

In light of the above, there is a need for a means for increasing the nitric acid strength produced from conventional plants which involves minimal expense, and does not adversely effect product yield.

OBJECTS OF THE INVENTION

It is therefore an object of the invention to provide an improved nitric acid production process.

It is a further object of the invention to provide an improved, cost effective process whereby oxygen may be injected into the process in such a manner that production and acid strength are increased over a system which does not use oxygen.

SUMMARY OF THE INVENTION

The invention is a process for making nitric acid comprising the steps of:

a) oxidizing ammonia gas with air in an ammonia converter to form gaseous nitric oxide and water vapor;
b) oxidizing said nitric oxide with air to form nitrogen dioxide gas;
c) dimerizing said nitrogen dioxide gas to form dinitrogen tetroxide gas, wherein both steps b and c take place in a cooler/condenser train;
d) reacting said dinitrogen tetroxide gas with water in an absorption tower to form aqueous nitric acid and nitric oxide gas; and
e) removing impurities from said aqueous nitric acid in a bleacher;

wherein additional oxygen is injected into the process, such that at least a portion of the total amount of additional oxygen injected is distributed between the bleacher and the cooler/condenser train with between 5% and 50% of the total flow of said additional oxygen being directed to the coder/condenser train.

Preferred embodiments of the invention are disclosed in dependent process claims 2 to 6.

Since the air flow to the converter may then be increased and the ammonia percentage held constant (or even increased), production will increase.

In addition to increasing production, distributing the oxygen flow as directed may also allow for both an increase in acid strength and decrease in NOx emissions as compared to a conventional (non-oxygen enriched) process.

The invention also teaches a method for retrofitting an existing nitric acid plant said process comprising:

a) providing a nitric acid production plant having process units including a converter, a cooler/condenser train, an absorption tower, a bleacher and means for providing air to said converter and said bleacher;

b) providing an oxygen source;

c) connecting said oxygen source to said cooler/condenser train; and

d) connecting said oxygen source to said means for providing air to said bleacher.

The invention also teaches retrofitting plants which comprise additional means which provide air to the cooler/condenser train such that an oxygen source may be connected to these means as well.

BRIEF DESCRIPTION OF THE DRAWINGS

Other objects, features and advantages will occur to those skilled in the art from the following description of the preferred embodiments and the accompanying drawings, in which:

Fig. 1 is a schematic diagram showing a conventional process for manufacturing nitric acid.

Figs. 2a-2e are schematic diagrams showing a process for manufacturing nitric acid having oxygen injection points according to different embodiments of the invention.

DETAILED DESCRIPTION OF THE INVENTION

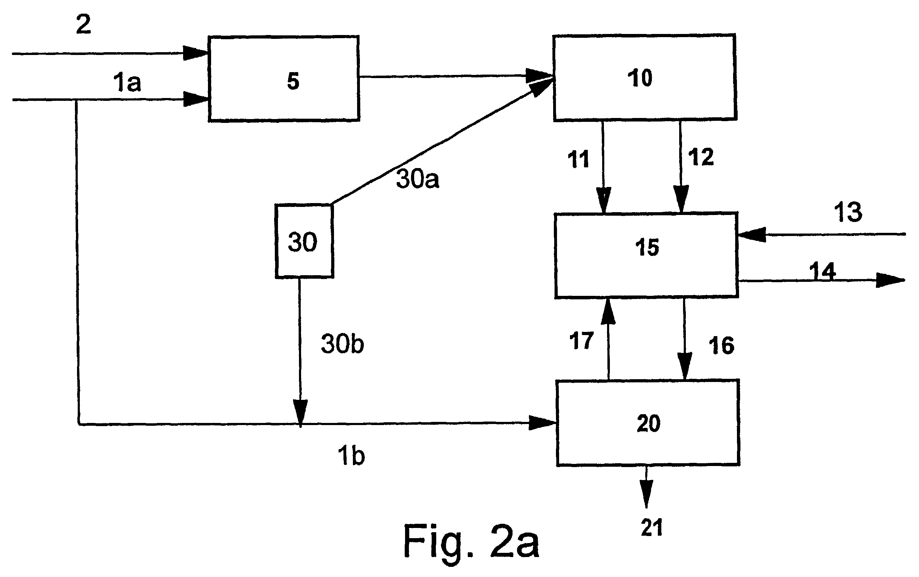

With reference to Figure 2a, oxygen from source **30** is injected in two separate locations: 1) anywhere within the cooler/condenser train **10**, and 2) the air lines **1b** leading to the bleacher **20.** This oxygen is provided through lines **30a** and **30b,** respectively. A portion of the air typically routed to the bleacher and cooler/condenser apparatus may then rerouted and added to the air already flowing to the ammonia converter **5** through line **1a.** The amount of secondary air rerouted may be between 0-100%, preferably 45-80%, and is limited by the amount required to bleach the acid and the amount of oxygen available for injection. With respect to the above, it should be noted that by the term "oxygen" we mean an oxygen enriched gas or liquid comprising at least 50 vol.%, preferably at least 90 vol.%, oxygen. Oxygen sources include, for example pipeline oxygen, stand alone cryogenic oxygen plants, PSA/VPSA oxygen plants, and liquid oxygen tanks.

We have found that preferably between 5% and 50%, more preferably between 10% and 30%, of the total oxygen flow should be directed to the cooler/condenser train. The fraction of the oxygen **30a** directed to the cooler/condenser train **10** should be injected anywhere from directly downstream of the converter **5** up to the base of the absorber **15**. It is desirable to inject the oxygen as close to the converter as possible to maximize the residence time of the oxygen within the cooler/condenser train. However, due to temperature and material constraints, injecting the oxygen directly after the converter typically requires a relatively difficult retrofit. In a preferred embodiment, the oxygen will be injected directly before, within or after the condensers in the cooler and condenser apparatus.

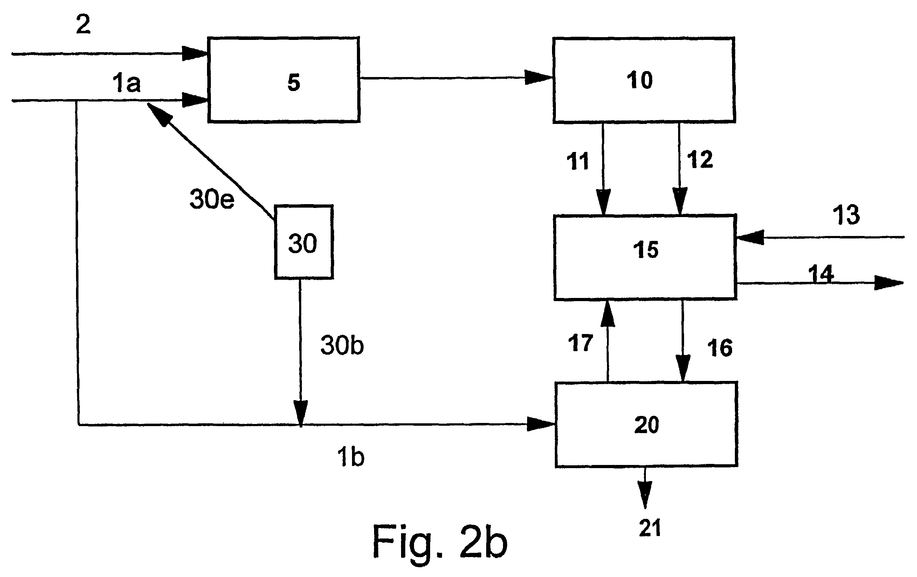

Alternatively, as shown in Figure 2b a fraction of the oxygen from source **30** allocated for the cooler/condenser train **10** is injected in front of the converter **5** through line **30e.** This maximizes the residence time of the oxygen, however this option may be undesirable due to increased loss of catalyst and safety concerns associated with ammonia combustion.

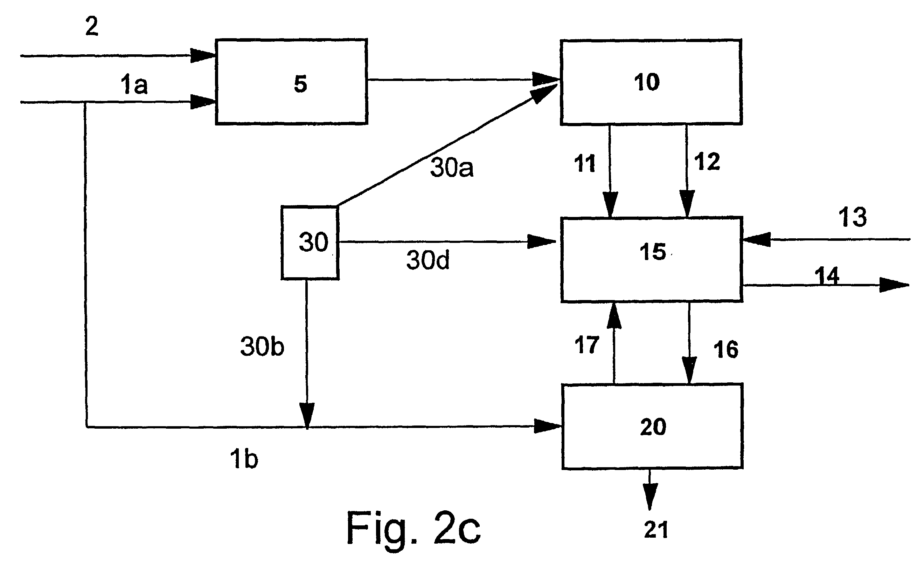

In another embodiment shown in Figure 2c, in addition to distributing the oxygen from source **30** between the bleacher **20** and the cooler/condenser train **10** (through lines **30b** and **30a,** respectively), oxygen is added to the absorption tower **15** through line **30d** in at least one of three ways: 1) at the base, 2) at the point of the absorber wherein the reaction of dinitrogen tetroxide gas with water to form aqueous nitric acid and nitric oxide gas is 50% complete, as taught by U.S. Patent 4,183,906. Note that this latter alternative is less preferred as it requires a difficult and costly retrofit; or 3) through line **1d** (shown in Fig. 1), if present.

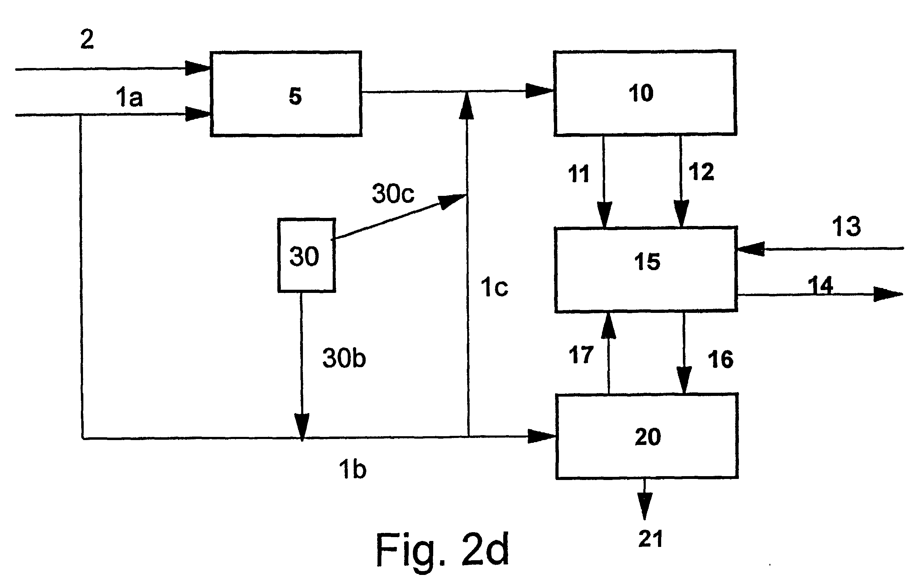

Figure 2d shows another embodiment which applies to a preexisting process where additional air **1c** is routed to the cooler/condensor train **10** to increase the oxygen partial pressure. In this embodiment, oxygen from source **30** is injected directly into the line providing air **1c** via line **30c.**

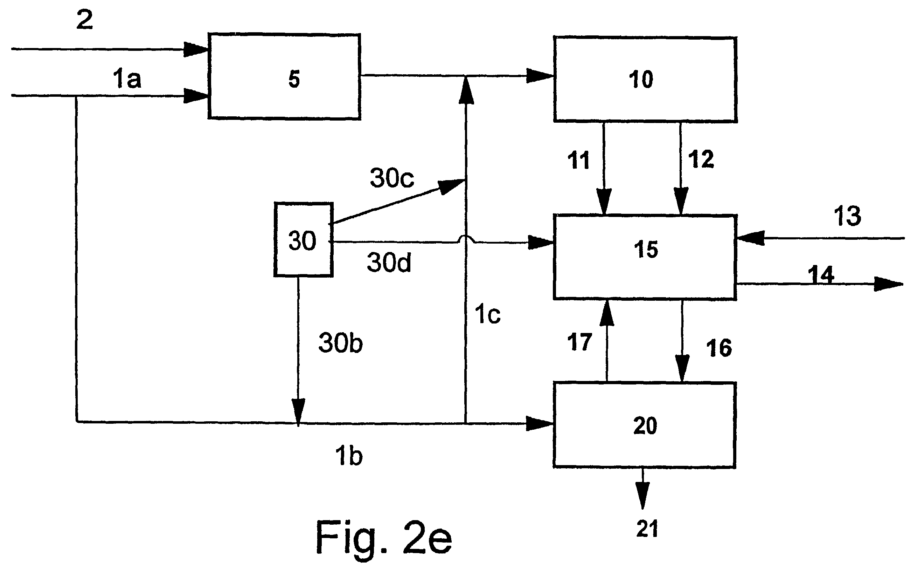

Figure 2e shows another embodiment which applies to a preexisting process where additional air **1c** is routed via line **1c** to the cooler/condensor train **10** to increase the oxygen partial pressure. In this embodiment, oxygen from source **30** is injected directly into the line providing air **1c** via line **30c** in addition to distributing the oxygen from source **30** between the bleacher **20** and the absorption tower **15** through line **30d** in at least one of three ways: 1) at the base, 2) at the point of the absorber wherein the reaction of dinitrogen tetroxide gas with water to form aqueous nitric acid and nitric oxide gas is 50% complete, as taught by U.S. Patent 4,183,906. Note that this latter alternative is less preferred as it requires a difficult and costly retrofit; or 3) through line **1d** (shown in Fig. 1), if present.

It should be noted that it is additionally advantageous if the oxygen is at a lower temperature than the air which it is replacing.

As indicated above, a significant advantage to the inventive process is the ease with which a preexisting plant may be retrofit. In our invention, oxygen may be directly injected into preexisting air lines which provide air **1a-1d,** or process piping within the cooler/condenser train **10**.

While not wishing to be bound to any theory, the mechanism behind this lowering in oxygen requirement is thought to be attributable to the increase in the state of oxidation of the NOx process gases at the base of the absorber. As described above, the NOx process gases arriving at the absorber are a mixture of NO, $NO_2$, and $N_2O_4$. We have found that a higher oxidation state at the base of the absorber will increase the efficiency of the absorber. In other words, a lower concentration of NO results in a higher tower yield.

We have also found that there is a relationship between the state of oxidation of the NOx process gas entering the absorber and oxygen requirement to produce a production increase under constant NOx emissions. Comparative modeling results have shown that for a process wherein oxygen is added to the cooler/condenser apparatus in an amount sufficient to completely oxidize NO, the oxygen requirement less than for a process wherein NO is not completely oxidized. In other words, when only $NO_2$ and $N_2O_4$ are present in the absorber, the oxygen requirement is reduced as compared to a process wherein NO, $NO_2$ and $N_2O_4$ are present in the absorber.

This model is consistent with our hypothesis that by increasing the oxidation state of the process gases which react in the absorber, tower yield increases and consequently oxygen requirements are decreased. The above model was confirmed through actual data obtained from a nitric acid plant. NOx emissions and acid color quality were held constant in both the experiments and models.

The experimental results are set forth in the Table below:

| | Case I | Case II | Case III |
|---|---|---|---|
| Fraction in Bleacher | 1 | 0.81 | 0.7 |
| Fraction in Base of Absorber | 0 | 0.19 | 0.14 |
| Fraction in Cooler/ Condenser | 0 | 0 | 0:16 |
| $O_2$ Requirement* | 1.08 | 1.02 | 0.97 |

\* $O_2$ requirement = pounds $O_2$ required per additional pound $HNO_3$ produced

As can be seen from the above data, by distributing oxygen flow as described in the invention, oxygen requirements for increased production may be decreased while maintaining constant NOx and acid color quality. Using the process of the invention, we have obtained production increases of up to about 20%.

As compared to the prior art, our solution improves upon Norsk Hydro by reducing oxygen requirements associated with increased production. Further, our solution improves upon US 4,183,906 by not requiring the oxygen to be injected at a particular point in the absorber. This is an improvement because adding an oxygen injection port to an absorber is a costly and difficult retrofit, as compared to our system where the oxygen is simply injected into preexisting air or process lines located at or near ground level.

Directing additional oxygen flow according to the invention also allows one to increase acid strength. As with production, advantages over the prior art include a reduction in the amount of oxygen required and ease of retrofit.

In a conventional (non-oxygen enriched) nitric acid production plant, nitric acid is typically produced with an acid strength of between 54 weight % and 68 weight %, depending upon the plant. There is often a need, however, to produce nitric acid having a strength higher than that capable of being typically produced.

There are two factors which control nitric acid strength in the production process. The first factor is the chemical equilibria between liquid phase nitric acid and gas phase $NO_x$ compounds. The second factor is the kinetics of $NO_x$ absorption. In practice, these are controlled by plant design and operation.

Chemical equilibria limit acid strength because the oxidation state of the $NO_x$ process gas entering the absorption tower determines the maximum strength of acid that can be produced. In a conventional production process, however, the acid is not allowed to obtain complete equilibrium with the process gas. In these cases, the second factor, the kinetics of $NO_x$ absorption, limits acid strength. The $NO_x$ absorption rate is usually controlled by the partial pressure of dinitrogen tetroxide with a higher rate being obtained with a higher partial pressure of dinitrogen tetroxide.

As indicated above, plant design and operation determines the oxidation state of the $NO_x$ process gas entering the absorption tower and the gas and liquid phase residence times in the absorption tower. The oxidation state determines both the chemical equilibria and the absorption kinetics. The residence times combine with the absorption kinetics to determine the acid strength that is produced.

Using oxygen to increase acid strength is superior to increasing the air-to-ammonia ratio because it does not sacrifice production. In certain cases, using oxygen may also allow a higher strength acid to be produced than that capable of being produced without oxygen.

Direct oxygen injection is superior to increasing strength with a plant revamp because it only requires a minimal capital investment from the nitric acid producer. For direct injection, the only capital expenses typically accrued by the producer are site preparation for the oxygen supply and the oxygen injection piping.

Typically, the oxygen used to increase acid strength will be economically justified by its ability to increase production and control $NO_x$ emissions. Thus the effective cost of the oxygen used to increase acid strength is zero. In a sense, increasing acid strength will typically be a free additional benefit associated with direct oxygen injection. Therefore, using oxygen to increase acid strength is less expensive than blending the acid with concentrated acid.

As discussed above, oxygen injected according to the process of the present invention increases the rate of nitric oxide oxidation in the cooler/condenser apparatus and/or the base of the absorption tower which, in turn, increases the oxidation state of the $NO_x$ process gas entering the absorption tower. As described above, the higher the oxidation state of the $NO_x$ gas, the higher the strength of the acid in equilibrium with the $NO_x$ and the higher the rate of $NO_x$ absorption. We have found that through oxygen enrichment according to the process of the invention, a plant may achieve about a 1 wt.% increase in acid strength. In addition, one may also lower the amount of process water entering the tower to further strengthen the acid by about another 1 wt.%. Our process does not sacrifice acid quality, reduce production, or increase $NO_x$ emissions.

In addition, the inventive technology can be used to reduce NOx by up to about 70% over conventional plants. As discussed above with respect to increased production and acid strength, advantages over the prior art include a reduction in the amount of oxygen required and ease of retrofit.

NOx reduction is achieved by increasing the oxygen partial pressure in the absorption tower **15**, such that the rate of gas phase NO oxidation is also increased. This increase in the rate of gas phase NO oxidation leads in turn to a decrease in NOx levels in the vent gas **14.** Further our process does not sacrifice acid quality.

As will be appreciated by those skilled in the art, any of the above process gains (production increase, acid strength increase or NOx reduction) may be achieved either alone or in combination with each other when practicing the invention.

Specific features of the invention are shown in one or more of the drawings for convenience only, as each feature may be combined with other features in accordance with the invention. Alternative embodiments will be recognized by those skilled in the art and are intended to be included within the scope of the claims.

**Claims**

**1.** A process for making nitric acid comprising the steps of:

a) oxidizing ammonia gas with air in an ammonia converter (5) to form gaseous nitric oxide and water vapor;

b) oxidizing said nitric oxide with air to form nitrogen dioxide gas;

c) dimerizing said nitrogen dioxide gas to form dinitrogen tetroxide gas, wherein both steps b and c take place in a cooler/condenser train (10);

d) reacting said dinitrogen tetroxide gas with water in an absorption tower (15) to form aqueous nitric acid and nitric oxide gas; and

e) removing impurities from said aqueous nitric acid in a bleacher (20);

wherein additional oxygen is injected into the process, such that at least a portion of the total amount of additional oxygen injected is distributed between the bleacher (20) and the cooler/condenser train (10), with between 5% and 50% of the total flow of said additional oxygen being directed to the cooler/condenser train (10).

2.  The process of claim 1, wherein NO is produced as a by-product in the cooler/condenser train (10), and the oxygen added to said cooler/condenser train is in an amount sufficient to decrease the amount of NO present in the absorption tower (15) to about zero.

3.  The process of claim 1, wherein the amount of oxygen injected into the bleacher (20) is between 50% and 95% of the total amount of oxygen added.

4.  The process of claim 1, wherein the amount of oxygen injected into the bleacher (20) is between 70% and 90% of the total amount of oxygen added.

5.  The process of claim 1, wherein a third portion of the total amount of oxygen added is injected directly into the absorption tower (15).

6.  The process according to claim 1, wherein said oxygen is provided from an oxygen enriched gas or liquid comprising at least 50 vol.% oxygen.


**Patentansprüche**

1.  Verfahren zum Herstellen von Salpetersäure, wobei im Zuge des Verfahrens:

a) Ammoniakgas mit Luft in einem Ammoniakreaktor (5) oxidiert wird, um gasförmiges Stickoxid und Wasserdampf zu erzeugen;

b) das Stickoxid mit Luft oxidiert wird, um Stickstoffdioxidgas zu bilden;

c) das Stickstoffdioxidgas dimerisiert wird, um Distickstofftetroxidgas zu bilden, wobei sowohl der Schritt b) als auch der Schritt c) in einem Kühler/Kondensatorzug (10) stattfindet;

d) das Distickstofftetroxidgas mit Wasser in einem Absorptionsturm (15) zur Reaktion gebracht wird, um wässrige Salpetersäure und Stickoxidgas zu erzeugen; und

e) Verunreinigungen aus der wässrigen Salpetersäure in einem Bleicher (20) entfernt werden;

wobei zusätzlicher Sauerstoff in den Prozess injiziert wird, so dass mindestens ein Teil der Gesamtmenge des zusätzlichen injizierten Sauerstoffs zwischen dem Bleicher (20) und dem Kühler/Kondensatorzug (10) verteilt wird, wobei zwischen 5 % und 50 % des Gesamtstroms des zusätzlichen Sauerstoffs zu dem Kühler/Kondensatorzug (10) geleitet werden.

2.  Verfahren nach Anspruch 1, wobei NO als Nebenprodukt in dem Kühler/Kondensatorzug (10) erzeugt wird und die dem Kühler/Kondensatorzug hinzugefügte Sauerstoffmenge ausreichend ist, um die in dem Absorptionsturm (15) vorhandene NO-Menge auf etwa Null zu verringern.

3.  Verfahren nach Anspruch 1, wobei die in den Bleicher (20) injizierte Sauerstoffmenge zwischen 50 % und 95 % der gesamten hinzugegebenen Sauerstoffmenge ausmacht.

4.  Verfahren nach Anspruch 1, wobei die in den Bleicher (20) injizierte Sauerstoffmenge zwischen 70 % und 90 % der Gesamtmenge des hinzugegebenen Sauerstoffs ausmacht.

5.  Verfahren nach Anspruch 1, wobei ein dritter Teil der Gesamtmenge des hinzugegebenen Sauerstoffs direkt in den Absorptionsturm (15) injiziert wird.

**6.** Verfahren nach Anspruch 1, wobei der Sauerstoff aus einem mit Sauerstoff angereicherten Gas oder einer mit Sauerstoff angereicherten Flüssigkeit mit einem Sauerstoffgehalt von mindestens 50 Vol.% bereitgestellt wird.

**Revendications**

**1.** Procédé de production d'acide nitrique, comprenant les étapes consistant à :

a) oxyder de l'ammoniac avec de l'air dans un convertisseur d'ammoniac (5) pour former de l'oxyde nitrique gazeux et de la vapeur d'eau ;
b) oxyder ledit oxyde nitrique avec de l'air pour former du dioxyde d'azote gazeux ;
c) dimériser ledit dioxyde d'azote gazeux pour former du tétroxyde de diazote gazeux, les étapes b et c se déroulant toutes les deux dans un train de refroidisseur/condenseur (10) ;
d) faire réagir ledit tétroxyde de diazote gazeux avec de l'eau dans une colonne d'absorption (15) pour former de l'acide nitrique aqueux et de l'oxyde nitrique gazeux ; et
e) éliminer les impuretés dudit acide nitrique aqueux dans un blanchisseur (20) ;

dans lequel de l'oxygène supplémentaire est injecté dans le procédé de façon à ce qu'au moins une portion de la quantité totale d'oxygène supplémentaire injecté soit distribuée entre le blanchisseur (20) et le train de refroidisseur/condenseur (10), entre 5 % et 50 % du flux total dudit oxygène supplémentaire étant dirigés vers le train de refroidisseur/condenseur (10).

**2.** Procédé selon la revendication 1, dans lequel du NO est produit en tant que produit secondaire dans le train de refroidisseur/condenseur (10), et l'oxygène ajouté audit train de refroidisseur/condenseur est présent en une quantité suffisante pour diminuer la quantité de NO présent dans la colonne d'absorption (15) jusqu'à environ zéro.

**3.** Procédé selon la revendication 1, dans lequel la quantité d'oxygène injecté dans le blanchisseur (20) représente entre 50 % et 95 % de la quantité totale d'oxygène ajouté.

**4.** Procédé selon la revendication 1, dans lequel la quantité d'oxygène injecté dans le blanchisseur (20) représente entre 70 % et 90 % de la quantité totale d'oxygène ajouté.

**5.** Procédé selon la revendication 1, dans lequel une troisième portion de la quantité totale d'oxygène ajoutée est injectée directement dans la colonne d'absorption (15).

**6.** Procédé selon la revendication 1, dans lequel ledit oxygène est fourni à partir d'un gaz ou d'un liquide enrichi en oxygène, comprenant au moins 50 % en volume d'oxygène.

EP 0 808 797 B1

Fig. 1

Fig. 2a

Fig. 2b

Fig. 2c

EP 0 808 797 B1

Fig. 2d

EP 0 808 797 B1

Fig. 2e